# EUROPÄISCHE PATENTSCHRIFT

(11) **EP 0 796 553 B1**
(45) Veröffentlichungstag und Bekanntmachung des Hinweises auf die Patenterteilung: **12.03.2003**
(21) Anmeldenummer: 96120221.5
(22) Anmeldetag: 17.12.1996
(51) Int. Cl.: A01C 5/06, A01B 49/06, A01C 7/20

(54) **Sägerät, insbesondere für Mulchsaat**
Sowing implement, in particular for mulch seeding
Semoir, en particulier pour semis en paillage

(30) Priorität: 22.03.1996 DE 29605356 U
(43) Veröffentlichungstag der Anmeldung: 24.09.1997
(73) Patentinhaber: Rabe Agrarsysteme GmbH & Co. KG, 49152 Bad Essen (DE)
(72) Erfinder: Gerdom, Friedrich, Dipl.-Ing., 49152 Bad Essen (DE)
(74) Vertreter: Böck, Bernhard

(56) Entgegenhaltungen:
- EP-A- 0 501 836
- WO-A-85/05246
- DE-U- 9 213 091
- FR-E- 65 716
- GB-A- 2 011 236
- GB-A- 2 222 756
- US-A- 4 116 140
- US-A- 5 398 771

## Beschreibung

Die Erfindung betrifft eine Sämaschine mit einem Rahmen, der einerseits für den Anschluß an eine vorlaufende Tiefenführungseinrichtung und andererseits für die Befestigung und Halterung von Säscharen sowie von je einer jedem Säschar zugeordneten Scharscheibe dient, wobei die Säschare im Arbeitsbereich der Scharscheiben angeordnet sind.

Sämaschinen der eingangs genannten Art sind aus der WO-85/05246 bekannt. Diese Druckschrift zeigt eine Sämaschine, deren Rahmen einen Saatgutbehälter trägt, wobei der Rahmen der Sämaschine über eine Kupplung an einen Traktor anhängbar ist. Die Tiefenführung dieser Sämaschine wird zum einen durch die Auflage beim Traktor und zum anderen durch eine nachgeschaltete Walzeneinheit bewirkt, die aus einzelnen Andruckwalzen besteht. Die Schare arbeiten mit Scheibenscharen zusammen, wobei die Scheibenschare in Fahrtrichtung gesehen schräg angestellt werden, so daß für die nachfolgenden Säschare eine Furche freigeräumt wird, in die das Saatgut abgelegt wird. Im Anschluß daran wird die Furche verschlossen und mittels der Andruckwalzen verfestigt. Die Andruckwalzen als solche sind unabhängig zueinander höhenbeweglich angeordnet, so daß Bodenunebenheiten quer zur Fahrtrichtung ausgeglichen werden können. Diese bekannten Sämaschinen sind aufwendig in der Konstruktion. Zudem erweist es sich bei diesen Sämaschinen als sehr nachteilig, daß diese eine nachgeschaltete Walze erfordern. Letztere kann bei feuchter, klebriger Bodenbeschaffenheit durch Ankleben das Saatgut wieder aufnehmen und so eine kontrollierte Saatgutablage unmöglich machen.

Der Erfindung liegt die Aufgabe zugrunde, eine Sämaschine der eingangs genannten Art so auszubilden, daß diese mit hohen Fahrgeschwindigkeiten bei gleichmäßiger Aussaat betrieben werden kann, eine Mulchsaat und gleichzeitig eine gute Einarbeitung von Mulch zuläßt, einfach im Aufbau und entweder solo oder aber mit beliebigen Bodenbearbeitungskombinationen kombiniert betreibbar ist.

Diese Aufgabe wird mit den Merkmalen des Anspruches 1 gelöst.

Gemäß der Erfindung ist die Sämaschine mit einem Rahmen ausgebildet, der Anschlußmittel aufweist, mit denen die Sämaschine starr an eine vorlaufende Tiefenführungseinrichtung, beispielsweise eine Walze, z. B. eine einoder mehrreihige Packer-Sternwalze, beispielsweise mit Walzenelementen nach DE-OS 35 41 542, oder eine Zahn-Packerwalze, oder aber auch Stützräder anschließbar ist. Diese Walze kann Bestandteil einer Bodenbearbeitungskombination sein, beispielsweise einer Kompaktegge, einer Kreiselegge, einer Bodenfräse. Vor diesen Bodenbearbeitungsgeräten können weitere Grubber etc. eingesetzt werden. Dieser starr mit der vorlaufenden Tiefenführungseinrichtung kuppelbare Rahmen weist einen quer zur Fahrtrichtung verlaufenden Querträger auf, an dem die miteinander wirkenden Scharscheiben und Säschare befestigt sind. Diese Säschare und Scharscheiben sind jeweils an einem Haltearm befestigt, der wiederum an einem Balken angeschlossen ist, der mit dem Querträger verbindbar ist. Diese an dem Balken angeordnete Einheit aus Scharscheibe und Säschar ist vorteilhaft mit einem lösbaren Befestigungselement auf dem Querträger befestigt, so daß die Anzahl der Säschare wie auch deren Abstand zueinander in einfacher Weise variierbar ist.

An einem Balken sind vorteilhaft die zwei Haltearme so befestigt, daß die zusammengehörigen Säschare und Scharscheiben in Fahrtrichtung relativ zum Balken versetzt angeordnet sind. Vorteilhaft werden die Haltearme der Säschare und Scharscheiben jeweils auf einer Seite des Balkens angeordnet, so daß hierdurch bereits der notwendige seitliche Abstand für die Furchenbreite erhalten wird. Diese Einheit kann komplett auf dem Querträger befestigt und an beliebigen Stellen angeschlossen werden. Die Scharscheiben als solche stehen vorteilhaft in einem Winkel von 10 bis 20 ° zur Lotrechten und sind darüber hinaus vorteilhaft im wesentlichen in Fahrtrichtung angeordnet. Durch diese Schrägstellung der Scharscheiben wird eine Lockerung des Bodens erreicht, so daß die neben bzw. im Arbeitsbereich hinter den Scharscheiben angeordneten Säschare in einen bereits gelockerten Boden eingreifen. Mulch etc. wird durch die Scharscheiben zerschnitten und zur Seite gedrückt, so daß die Furchenziehung und der Sävorgang durch den Mulch nicht behindert wird.

Durch die starre Anordnung des Rahmens an der vorauslaufenden Tiefenführungseinrichtung wird eine vibrationsarme Befestigung der Säschare und Scharscheiben erreicht, so daß die Einrichtung mit einer vergleichsweisen hohen Geschwindigkeit betrieben werden kann. Vorteilhaft sind die Scharscheiben jeweils wechselseitig zur Lotrechten hin geneigt, so daß innere Kräfte auf dem Rahmen ausgeglichen werden, was gleichermaßen zur Beruhigung des Laufes der Sämaschine führt und damit auch zu einer noch höheren Geschwindigkeit.

Zur Vermeidung von Schäden, die durch Steine etc. im Boden hervorgerufen werden können, sind die Haltearme für jedes Säschar und jede Scharscheibe gelenkig am Balken angeordnet, wobei die Arbeitsstellung durch eine vorgespannte Feder eingehalten wird. Bei der Normalbelastung von Scharscheibe und Säschar wird diese in ihrer Endstellung gehalten. Erst bei Überlast, die eine Beschädigung von Scharscheibe oder Säschar befürchten läßt, erfolgt ein Ausweichen nach oben.

Als besonders vorteilhaft für den Betrieb hat sich herausgestellt, die Scharscheiben mit einem gewellten oder gezackten Umfang auszuführen, wodurch die Bodenantriebskraft erhöht sowie das Entfernen und die Zerteilung des Mulches verbessert wird.

Vorteilhaft kann der Balken, an dem die Säschare befestigt sind, über eine Parallellenkereinheit an dem Querträger angeschlossen werden, wobei hier eine Feder dafür sorgt, daß der Balken in der Arbeitsstellung gegen einen Anschlag gepreßt gehalten wird, der die Arbeitsstellung definiert. An jedem Balken ist dann ein Nachlaufrad in Form einer Einzel- oder Doppelwalze ausgebildet, das starr, jedoch einstellbar mit dem Balken verbunden ist. Dieses Nachlaufrad bzw. Nachlaufwalze dient zum einen zur Rückverfestigung der Furche bzw. Furchen und zum anderen hat es die Aufgabe, eine Feineinstellung für die Tiefenführung zu gewährleisten. Das Rad wird der Bodenkontur folgend nachgeführt, so daß die Säorgane ihre einmal vorgewählte Arbeitstiefe beibehalten. Somit wird eine ausgesprochen hohe Genauigkeit hinsichtlich der Ablagetiefe des Saatgutes erreicht. Dies ist insbesondere bei Bodenwellen etc. vorteilhaft. Durch diese Feinanpassung wird gleichermaßen ein Springen etc. verhindert, so daß die Sämaschine mit einer gleichmäßigen, hohen Geschwindigkeit auch bei Bodenwellen betrieben werden kann.

Ein Ausführungsbeispiel der Erfindung ist im folgenden anhand der Zeichnung näher beschrieben. In dieser zeigen:
- Fig. 1: eine Seitenansicht einer erfindungsgemäß ausgebildeten Sämaschine,
- Fig. 2a: eine Seitenansicht einer Doppelsäeinheit gemäß der Erfindung gemäß Fig. 1 in vergrößerter Darstellung,
- Fig. 2b: eine Rückansicht der am Querträger befestigten Doppelsäeinheiten,
- Fig. 3: eine Auswahl von Kombinationsmöglichkeiten mit einer erfindungsgemäßen Sämaschine,
- Fig. 4: eine Seitenansicht einer weiteren Ausführungsform gemäß der Erfindung,
- Fig. 5: eine Seitenansicht der Doppelsäeinheit gemäß Fig. 4 in vergrößerter Darstellung und
- Fig. 6: eine Ansicht von hinten der Doppelsäeinheiten gemäß Fig. 4.

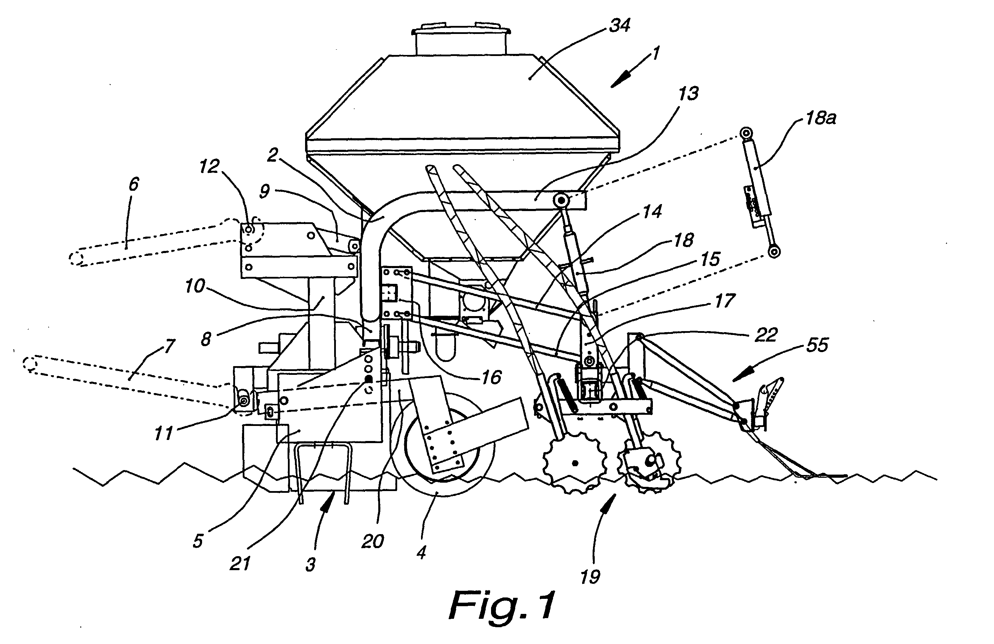

Die Fig. 1 zeigt eine Bodenbearbeitungskombination mit einer erfindungsgemäß ausgebildeten Sämaschine 1, die über ihren Rahmen 2 starr an eine vorlaufende Bodenbearbeitungskombination 3 angeschlossen ist, die aus einer Tiefenführungswalze 4 und einer Kreiselegge 5 besteht. Die Kreiselegge 5 ist an die Oberlenker 6 bzw. Unterlenker 7 eines nicht dargestellten Schleppers anschließbar.

Der Rahmen 2 der Bodenbearbeitungsmaschine ist über untere Befestigungselemente 8 sowie obere Befestigungselemente 9 mit dem Anbaubock 10 der Kreiselegge 5 starr verbunden. Dieser Anbaubock weist Unterlenkeranschlüsse 11 und einen Oberlenkeranschluß 12 auf.

Der Rahmen 2 besteht aus einem winkelförmigen Teil 13 sowie zweier Parallellenker 14, 15, die einerseits an einem Befestigungsteil 16 und andererseits an einem Arm 17 angeschlossen sind, der beide Lenker miteinander verbindet. Hierdurch wird eine Viergelenk-Führung für den Arm 17 erhalten. Die Fixierung der Parallellenker-Einheit 14, 15 einschließlich des Armes 17 relativ zu dem winkelförmigen Teil 13 erfolgt über ein Spannschloß 18. Alternativ zum Spannschloß 18 kann auch ein Hydraulikzylinder 18a eingesetzt werden, der die Verstellung der Arbeitstiefe der Säeinheit 19 erleichtert.

Mittels des Spannschlosses 18 bzw. des hydraulischen Zylinders 18a wird die Arbeitstiefe der Säeinheit 19 relativ zur vorlaufenden Tiefenführungseinrichtung 4 eingestellt. Die Kreiselegge 5 ihrerseits stützt sich einschließlich ihres Anbaubockes 10 auf einem Arm 20 der Walze 4 ab. Die Lage der Kreiselegge 5 relativ zu diesem Arm und damit zur Tiefenführungseinrichtung 4 wird durch Bolzen 21 eingestellt, die in verschiedene Bohrungen der Kreiselegge 5 einschiebbar sind. Hierdurch wird gleichermaßen auch die Arbeitstiefe der Säeinheit 19 mit verstellt.

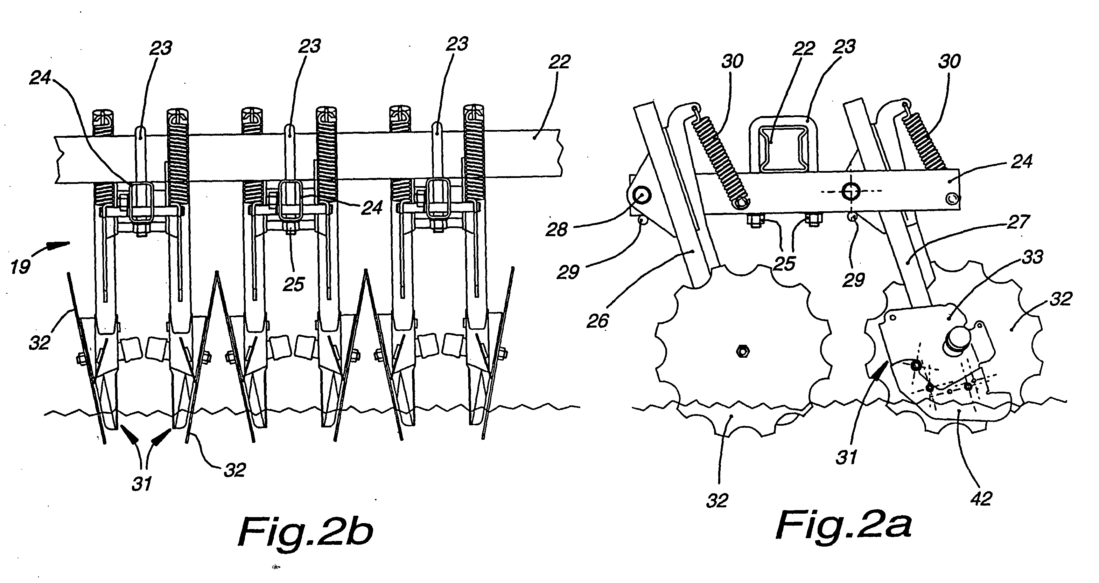

An dem Arm 17 der Sämaschine 1 ist eine Quertraverse 22 befestigt, die in den Fig. 2a und 2b in vergrößertem Maßstab dargestellt ist. An diese Quertraverse sind mittels Schraubbändern 23 die Säeinheiten 19 befestigt. Diese Schraubbänder durchgreifen einen senkrecht zu dem Querträger 22 verlaufenden Balken 24, wobei die Verspannung durch Muttern 25 erfolgt.

An jedem Balken 24 sind auf beiden Seiten Haltearme 26 und 27 schwenkbar mittels eines Drehzapfens 28 angelenkt. An jedem Balken sind, den jeweiligen Haltearmen 26, 27 zugeordnet, Anschläge 29 in Form von Bolzen befestigt, die zur Festlegung der Arbeitsstellung der Haltearme 26, 27 dienen. Zur Fixierung dieser Arbeitsstellung dient eine Feder 30, die einerseits am Haltearm 26, 27 und andererseits am Balken 24 befestigt ist. Diese Feder ist vorgespannt, so daß bei normalem Betrieb die Haltearme an ihrem jeweiligen Anschlag 29 am Balken 24 anliegen. Erst bei Überlast tritt eine Verschwenkung der Haltearme entgegen dem Uhrzeigersinn ein, so daß Beschädigungen der Säeinheit 19 vermieden werden.

Die Säeinheit 19 besteht aus mehreren jeweils zu einer Doppeleinheit zusammengefaßten Säscharen 31 sowie Scharscheiben 32, die beide an einem gemeinsamen Haltearm 26, 27 angeordnet sind. Jedes Säschar weist einen Scharkörper 33 sowie eine Scharspitze 42 auf. Jeweils ein Haltearm 26, 27 ist auf je einer Seite des Balkens 24 angeordnet. Die Scharscheiben 32 sind jeweils gegeneinander gerichtet, und zwar mit ihren unteren Enden, wobei die Säschare 31 an der jeweiligen Innenseite der Scharscheiben angeordnet sind. Durch die Schrägstellung der Scharscheiben mit 10 bis 20 ° wird eine gute Lockerung des Erdbodens erreicht, wobei die Säschare sich im gelockerten Bereich des Bodens befinden. Durch diese relativ starke Schrägstellung der Scharscheiben kann die Scharscheibe darüber hinaus auch im wesentlichen in Fahrtrichtung ausgerichtet werden, was Vorteile im Hinblick auf den Arbeitswiderstand hat.

Wie aus Fig. 1 ersichtlich kann hinter der Säeinheit 19 ein Nachbearbeitungsgerät 55 vorgesehen werden, beispielsweise Striegel zur Vergleichmäßigung des Saatbeetes.

Bei dem Ausführungsbeispiel nach Fig. 1 ist der Saatgutbehälter 34 auf dem Rahmen 2 der Sämaschine 1 befestigt. Es ist jedoch auch denkbar, den Saatgutbehälter an anderer Stelle vorzusehen, beispielsweise durch die Verwendung eines Frontsaatgutbehälters.

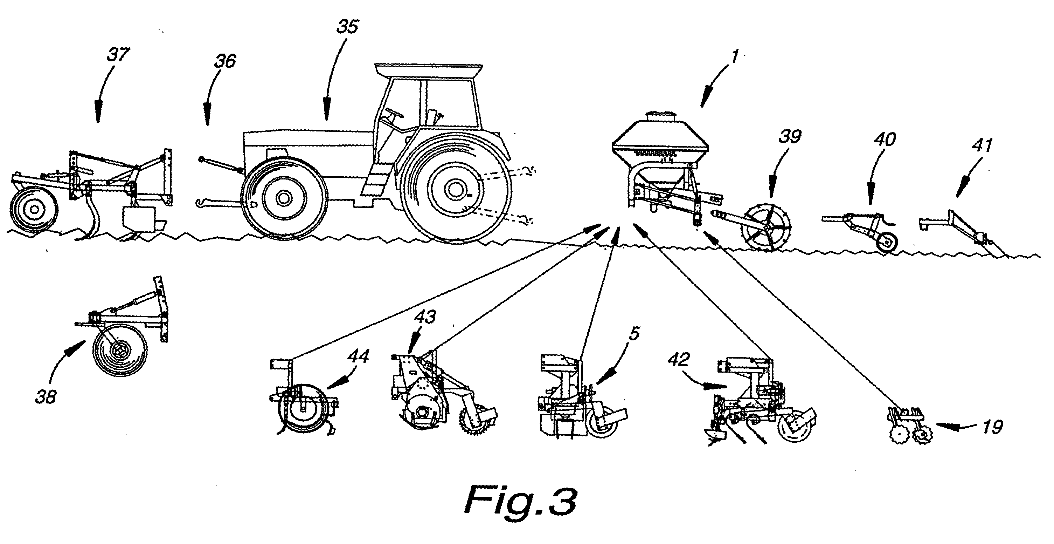

Die Fig. 3 zeigt die möglichen Kombinationen, in der eine Sämaschine gemäß der Erfindung eingesetzt werden kann. An einem Schlepper 35 kann beispielsweise an dessen vorderen Anschlußpunkten 36 ein Grubber 37 angeschlossen werden. Anstelle des Grubbers kann auch ein Packer 38 vorgesehen werden. An die Sämaschine 1 mit ihrer Säeinheit 19 kann ein Spornrad 39 angeschlossen werden. Eine Andruckwalze 40 oder eine Striegeleinrichtung 41 kann den Säeinheiten nachgeschaltet sein. Als der Sämaschine 1 vorlaufendes Gerät können entweder eine Kompaktegge 42, eine Kreiselegge 5, eine Bodenfräse 43 oder im einfachsten Fall lediglich Stützräder 44 vorgesehen werden. Im einfachsten Fall kann die Sämaschine 1 mit den Stützrädern 44 an den Schlepper 35 angeschlossen werden. Die Kombinationsmöglichkeit einer erfindungsgemäßen Sämaschine mit beliebigen Geräten ist sehr groß.

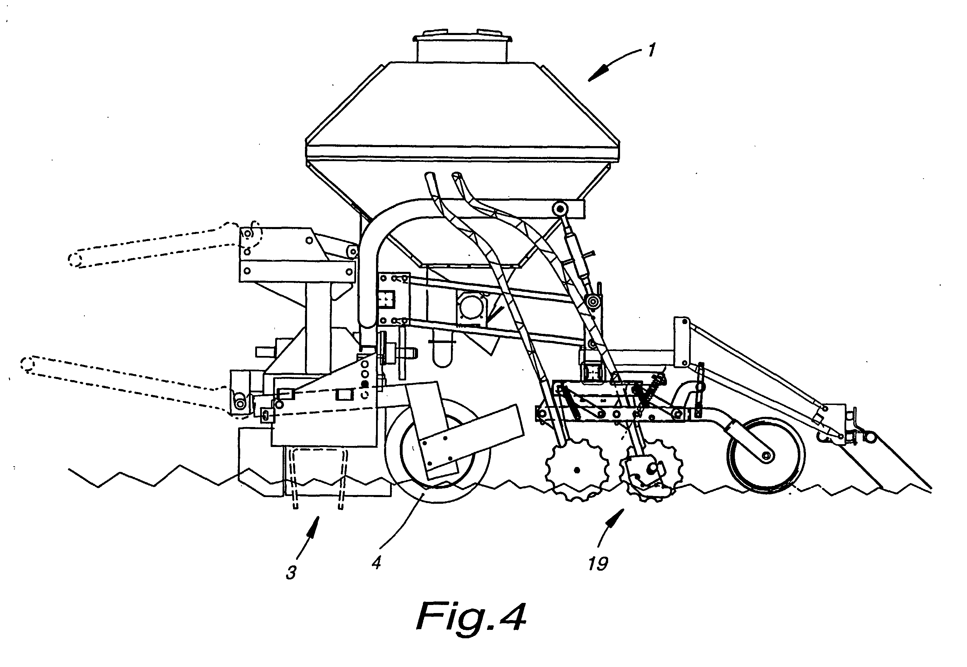

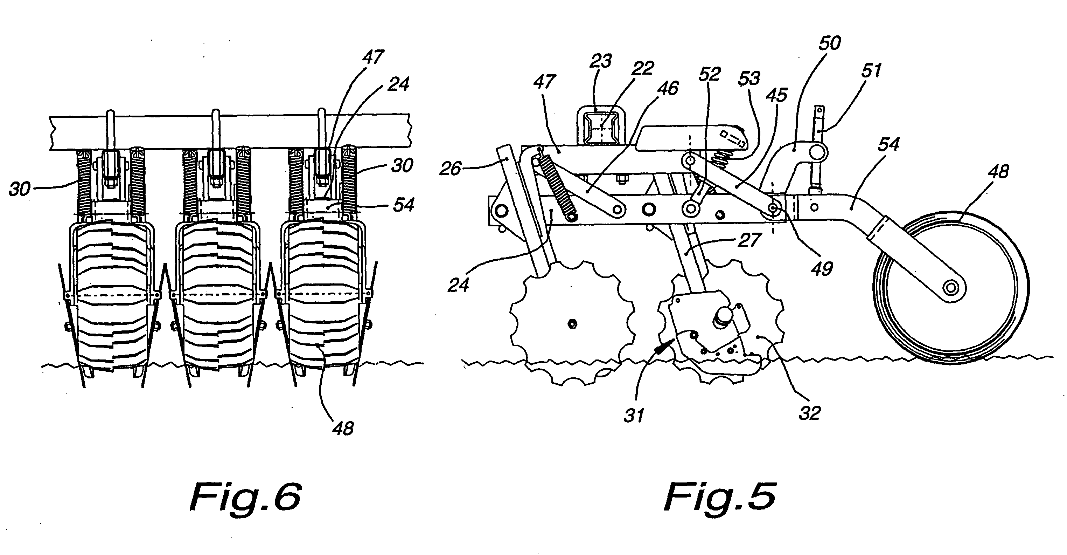

Fig. 4 zeigt ein weiteres Ausführungsbeispiel gemäß der Erfindung, bei dem gleiche Teile mit gleichen Bezugszeichen versehen sind. Diese Ausführungsform unterscheidet sich von der nach Fig. 1 in der Ausbildung der Säeinheit 19. Diese Säeinheit 19 ist in größerem Maßstab in Fig. 5 und 6 dargestellt. Bei diesem Ausführungsbeispiel sind die Säschare 31 sowie die Scharscheiben 32 gleichfalls über Haltearme 26, 27 am Balken 24 in der gleichen Weise angeschlossen, wie dies anhand der Fig. 2a und 2b erläutert worden ist. Der Unterschied dieser Ausführungsform besteht darin, daß der Balken 24 seinerseits über ein Parallellenkerpaar 45, 46 an einem Balken 47 angeschlossen ist, der seinerseits über Schraubbänder 23 an dem Querträger 22 angeschlossen ist. Hierdurch wird eine Relativbewegung des Balkens 24 zu dem Querträger 22 ermöglicht. An dem Balken 24 ist ein Walzenelement 48 über eine Schwenkachse 49 angeschlossen. Ein Arm 50 am Balken 24 überbrückt die Schwenkachse 49 und weist an seinem Ende eine Spindel 51 auf, die mit der Halterung 54 des Walzenelementes 48 verbunden ist und mit der die relative Lage des Walzenelementes 48 zum Balken 24 einstellbar ist.

Zwischen dem Balken 24 und dem Balken 47 ist eine Stange 52 angeordnet, die am Balken 24 drehbar gelagert ist. Im Balken 47 ist diese Stange verschiebbar gelagert, wobei eine Feder 53 den Balken 24 in einer unteren vorgegebenen Arbeitsstellung hält. Diese Feder 53 ist vorgespannt, wobei ein Anheben des Balkens 24 relativ zum Querträger 22 dann erfolgt, wenn aufgrund von Bodenunebenheiten die Belastung des Walzenelemente 48 einen vorgegebenen Wert übersteigt. Man erhält hierdurch nicht nur eine Verfestigung im Bereich der Saateinbringung, sondern darüber hinaus auch noch eine Feintiefenführung, die insbesondere wirksam wird bei Bodenwellen sowohl in Arbeitsrichtung als auch quer dazu.

## Patentansprüche

1. Sämaschine (1) mit einem Rahmen (2), der einerseits für den Anschluß an eine vorlaufende Tiefenführungseinrichtung (4) und andererseits für die Befestigung und Halterung von Säscharen (31) sowie von je einer jedem Säschar (31) zugeordneten Scharscheibe (32) dient, wobei die Säschare (31) im Arbeitsbereich der Scharscheiben (32) angeordnet sind, **dadurch gekennzeichnet, daß** der Rahmen (2) Anschlußmittel (8, 9) aufweist, die zum starren Anschluß des Rahmens (2) an die Tiefenführungseinrichtung (4) dienen, daß der Rahmen (2) einen im wesentlichen quer zur Fahrtrichtung verlaufenden Querträger (22) aufweist, der zur Halterung der Säschare (31) und Scharscheiben (32) dient, daß je ein Säschar (31) und eine Scharscheibe (32) an einem Haltearm (26, 27) befestigt sind, daß jeweils zwei Säschare (31) und Scharscheiben (32) mit ihren Haltearmen (26, 27) an einem Balken (24) befestigt sind, der an dem Querträger (22) des Rahmens (2) angeschlossen ist und senkrecht zu diesem verläuft.

2. Sämaschine nach Anspruch 1, **dadurch gekennzeichnet, daß** die Säschare (31) seitlich neben den Scharscheiben (32) angeordnet sind.

3. Sämaschine nach Anspruch 1 oder 2, **dadurch gekennzeichnet, daß** die Scharscheiben (32) in einem Winkel von 10 bis 20 ° zur Lotrechten geneigt sind.

4. Sämaschine nach einem der Ansprüche 1 bis 3, **dadurch gekennzeichnet, daß** jeder Haltearm (26, 27) der Säschare (31) und Scharscheiben (32) über eine Schwenkachse (28) am Rahmen (2) angeschlossen ist, wobei die Schwenkbewegung erst nach Überschreiten einer vorgegebenen Belastung eintritt.

5. Sämaschine nach Anspruch 4, **dadurch gekennzeichnet, daß** die Säschare (31) und Scharscheiben (32) mittels einer vorgespannten Feder (30) gegen einen Anschlag (29) am Balken (24) gepreßt gehalten sind.

6. Sämaschine nach Anspruch 4 oder 5, **dadurch gekennzeichnet, daß** die Säschare (31) und Scharscheiben (32) am gleichen Haltearm (26, 27) befestigt sind.

7. Sämaschine nach Anspruch 6, **dadurch gekennzeichnet, daß** die Haltearme (26, 27) der Säschare (31) und Scharscheiben (32) auf je einer Seite des Balkens (24) und vorteilhaft in Längsrichtung zueinander versetzt befestigt sind.

8. Sämaschine nach einem der Ansprüche 6 bis 7, **dadurch gekennzeichnet, daß** die an einem Balken (24) befestigten Scharscheiben (32) entweder in ihrem unteren oder in ihrem oberen Bereich aufeinander zugerichtet sind.

9. Sämaschine nach einem der Ansprüche 6 bis 8, **dadurch gekennzeichnet, daß** die an einem Balken (24) befestigten Säschare (31) entweder jeweils auf der einander zugerichteten oder auf der einander abgewandten Seite der Scharscheiben (32) liegen.

10. Sämaschine nach einem der Ansprüche 1 bis 9, **dadurch gekennzeichnet, daß** der Querträger (22) des Rahmens (2) einschließlich des die Säschare (31) und die Scharscheiben (32) tragenden Balkens (24) in der Höhe, z. B. mit Hilfe eines Spannschlosses (18) oder eines Hydraulikzylinders (18a) relativ zu den übrigen Rahmenteilen (13, 22) verstellbar ist.

11. Sämaschine nach Anspruch 10, **dadurch gekennzeichnet, daß** der Querbalken (22) über ein Parallelogrammgestänge (14, 15) mit den übrigen Rahmenteilen verbunden ist.

12. Sämaschine nach einem der Ansprüche 1 bis 11, **dadurch gekennzeichnet, daß** der Querbalken (22) über die Arbeitsbreite der Sämaschine in Segmente unterteilt ist.

13. Sämaschine nach einem der Ansprüche 1 bis 12, **dadurch gekennzeichnet, daß** die Tiefenführungseinrichtung (4) aus einer Walze besteht.

14. Sämaschine nach Anspruch 13, **dadurch gekennzeichnet, daß** die Walze als ein- oder mehrreihige Packer-Sternwalze ausgebildet ist.

15. Sämaschine nach Anspruch 13 oder 14, **dadurch gekennzeichnet, daß** die Walze mit einer Bodenbearbeitungsmaschine, wie einer Kreiselegge, Bodenfräse etc. kombiniert ist.

16. Sämaschine nach einem der Ansprüche 13 bis 15, **dadurch gekennzeichnet, daß** die Walze über ihre Arbeitsbreite in Segmente unterteilt ist.

17. Sämaschine nach einem der Ansprüche 1 bis 16, **dadurch gekennzeichnet, daß** der Säbehälter (34) der Sämaschine (1) auf dem Rahmen (2) befestigt ist.

18. Sämaschine nach einem der Ansprüche 1 bis 17, **dadurch gekennzeichnet, daß** jedem Balken (24) des Rahmens (2) der Sämaschine (1) ein Walzenelement (48) nachgeordnet ist.

19. Sämaschine nach einem der Ansprüche 1 bis 17, **dadurch gekennzeichnet, daß** mehreren nebeneinanderliegenden Balken (24) ein gemeinsames Walzenelement nachgeordnet ist.

20. Sämaschine nach Anspruch 18 oder 19, **dadurch gekennzeichnet, daß** der oder die Balken (24) über eine Parallellenkereinheit (45, 46) mit dem Querträger (22) verbunden ist.

21. Sämaschine nach Anspruch 20, **dadurch gekennzeichnet, daß** zwischen dem Querträger (22) und dem oder den Balken (24) eine vorgespannte Feder (53) eingeschaltet ist, die den oder die Balken (24) in der Arbeitsstellung hält und gleichzeitig das Walzenelement (48) belastet.

22. Sämaschine nach einem der Ansprüche 1 bis 21, **dadurch gekennzeichnet, daß** die Scharscheiben (32) auf ihrem Umfang gewellt oder gezackt sind.

23. Sämaschine nach einem der Ansprüche 1 bis 22, **dadurch gekennzeichnet, daß** die Scharscheiben (32) gewölbt sind.

24. Sämaschine nach einem der Ansprüche 1 bis 23, **dadurch gekennzeichnet, daß** hinter den Säscharen (31) und Scharscheiben (32) ein weiteres Bodenbearbeitungsgerät (55), z. B. ein Striegel oder eine Andrückwalze, angeordnet ist.

25. Sämaschine nach Anspruch 24, **dadurch gekennzeichnet, daß** das weitere Bodenbearbeitungsgerät (55) über seine Arbeitsbreite in Segmente unterteilt ist.

26. Sämaschine nach einem der Ansprüche 1 bis 25, **dadurch gekennzeichnet, daß** die Haltearme (26, 27) in einem Winkel von 0 bis 25° zur Lotrechten nach hinten geneigt sind.

## Claims

1. A sowing machine (1) having a frame (2) which on the one hand is used for attachment to a preceding depth guide device (4) and on the other hand for the securing and mounting of sowing shares (31) as well as of share discs (32) associated one with each sowing share (31), wherein the sowing shares (31) are arranged in the working region of the share discs (32), **characterised in that** the frame (2) has attachment means (8, 9) used for the fixed attachment of the frame (2) to the depth guide device (4), **in that** the frame (2) has a traverse (22), running substantially transversely to the direction of travel, used to mount the sowing shares (31) and share discs (32), **in that** one each of a sowing share (31) and a share disc (32) are secured to a supporting arm (26, 27), **in that** in each case two sowing shares (31) and share discs (32) are secured to a beam (24) by means of their supporting arms (26, 27), which beam (24) is attached to the traverse (22) of the frame (2) and runs at right angles thereto.

2. A sowing machine according to Claim 1, **characterised in that** the sowing shares (31) are arranged laterally next to the share discs (32).

3. A sowing machine according to Claim 1 or 2, **characterised in that** the share discs (32) are inclined at an angle of 10 to 20° to the vertical.

4. A sowing machine according to any one of Claims 1 to 3, **characterised in that** each supporting arm (26, 27) of the sowing shares (31) and share discs (32) is attached to the frame (2) via a pivot pin (28), the pivoting motion only taking place after a given load has been exceeded.

5. A sowing machine according to Claim 4, **characterised in that** the sowing shares (31) and share discs (32) are kept pressed against a stop (29) on the beam (24) by means of a prestressed spring (30).

6. A sowing machine according to Claim 4 or 5, **characterised in that** the sowing shares (31) and share discs (32) are secured to the same supporting arm (26, 27).

7. A sowing machine according to Claim 6, **characterised in that** the supporting arms (26, 27) of the sowing shares (31) and share discs (32) are secured on a respective side of the beam (24), advantageously staggered in the longitudinal direction.

8. A sowing machine according to either of Claims 6 to 7, **characterised in that** the share discs (32) secured to a beam (24) are directed towards one another either in their lower region or in their upper region.

9. A sowing machine according to any one of Claims 6 to 8, **characterised in that** the sowing shares (31) secured to a beam (24) either each lie on the facing side of the share discs (32) or on the remote side thereof.

10. A sowing machine according to any one of Claims 1 to 9, **characterised in that** the traverse (22) of the frame (2), including the beam (24) bearing the sowing shares (31) and the share discs (32), is vertically-adjustable, e.g. with the aid of a turnbuckle (18) or a hydraulic cylinder (18a), relative to the other frame parts (13, 22).

11. A sowing machine according to Claim 10, **characterised in that** the transverse beam (22) is connected to the other frame parts via a parallelogram linkage (14, 15).

12. A sowing machine according to any one of Claims 1 to 11, **characterised in that** the transverse beam (22) is divided into segments over the working width of the sowing machine.

13. A sowing machine according to any one of Claims 1 to 12, **characterised in that** the depth guide device (4) is a roller.

14. A sowing machine according to Claim 13, **characterised in that** the roller is in the form of a single-row or multiple-row furrow press toothed-roller.

15. A sowing machine according to Claim 13 or 14, **characterised in that** the roller is combined with a soil cultivation machine, such as a rotary harrow, rotary hoe etc.

16. A sowing machine according to any one of Claims 13 to 15, **characterised in that** the roller is divided into segments over its working width.

17. A sowing machine according to any one of Claims 1 to 16, **characterised in that** the sowing container (34) of the sowing machine (1) is secured on the frame (2).

18. A sowing machine according to any one of Claims 1 to 17, **characterised in that** a roller element (48) is arranged after each beam (24) of the frame (2) of the sowing machine (1).

19. A sowing machine according to any one of Claims 1 to 17, **characterised in that** a common roller element is arranged after a plurality of beams (24) lying side-by-side.

20. A sowing machine according to Claim 18 or 19, **characterised in that** the beam (24) or beams (24) is/are connected to the traverse (22) via a parallel-linkage unit (45, 46).

21. A sowing machine according to Claim 20, **characterised in that** a prestressed spring (53) is inserted between the traverse (22) and the beam (24) or beams (24), which spring (53) keeps the beam (24) or beams (24) in the working position and at the same time loads the roller element (48).

22. A sowing machine according to any one of Claims 1 to 21, **characterised in that** the circumference of the share discs (32) is undulated or serrated.

23. A sowing machine according to any one of Claims 1 to 22, **characterised in that** the share discs (32) are convex.

24. A sowing machine according to any one of Claims 1 to 23, **characterised in that** a further soil cultivation implement (55), e.g. a flexible harrow or a pressing roller, is arranged behind the sowing shares (31) and share discs (32).

25. A sowing machine according to Claim 24, **characterised in that** the further soil cultivation implement (55) is divided into segments over its working width.

26. A sowing machine according to any one of Claims 1 to 25, **characterised in that** the supporting arms (26, 27) are inclined rearwards at an angle of 0 to 25° to the vertical.

## Revendications

1. Semoir (1) comprenant un châssis (2) servant, d'une part, au rattachement à un dispositif de réglage vertical (4) situé à l'avant et, d'autre part, à la fixation et au support de socs de semoir (31) ainsi que des disques ouvreurs (32) associés chacun à un soc de semoir (31), lesdits socs de semoir (31) étant disposés dans le rayon d'action des disques ouvreurs (32), **caractérisé en ce que** le châssis (2) présente des moyens de rattachement (8, 9) servant à rattacher de manière rigide le châssis (2) au dispositif de réglage vertical (4), **en ce que** le châssis (2) présente un support transversal (22) s'étendant essentiellement transversalement au sens de déplacement et servant à la fixation des socs de semoir (31) et des disques ouvreurs (32), **en ce qu'**un soc de semoir (31) et un disque ouvreur (32) sont fixés respectivement à un bras porteur (26, 27), **en ce que** deux socs de semoir (31) et deux disques ouvreurs (32) sont fixés, avec leurs bras porteurs respectifs (26, 27), à une poutre (24), laquelle est rattachée au support transversal (22) du châssis (2) et s'étend perpendiculairement à celui-ci.

2. Semoir selon la revendication 1, **caractérisé en ce que** les socs de semoir (31) sont disposés latéralement par rapport aux disques ouvreurs (32) au voisinage de ceux-ci.

3. Semoir selon la revendication 1 ou 2, **caractérisé en ce que** les disques ouvreurs (32) présentent une inclinaison de 10 à 20° par rapport à la verticale.

4. Semoir selon l'une des revendications 1 à 3, **caractérisé en ce que** chaque bras porteur (26, 27) supportant les socs de semoir (31) et les disques ouvreurs (32) est articulé sur le châssis (2) autour d'un axe de pivotement (28), le mouvement pivotant n'intervenant que lors du dépassement d'une charge prédéfinie.

5. Semoir selon la revendication 4, **caractérisé en ce que** les socs de semoir (31) et les disques ouvreurs (32) sont sollicités contre une butée (29) située sur la poutre (24) au moyen d'un ressort (30) tendu.

6. Semoir selon la revendication 4 ou 5, **caractérisé en ce que** les socs de semoir (31) et les disques ouvreurs (32) sont fixés sur le même bras porteur (26, 27).

7. Semoir selon la revendication 6, **caractérisé en ce que** les bras porteurs (26, 27) supportant les socs de semoir (31) et les disques ouvreurs (32) sont fixés respectivement de part et d'autre de la poutre (24), décalés avantageusement les uns par rapport aux autres dans la direction longitudinale.

8. Semoir selon l'une des revendications 6 à 7, **caractérisé en ce que** les disques ouvreurs (32) fixés sur une même poutre (24) sont rapprochés l'un de l'autre soit à leur partie inférieure, soit à leur partie supérieure.

9. Semoir selon l'une des revendications 6 à 8, **caractérisé en ce que** les socs de semoir (31) fixés sur une même poutre (24) se trouvent soit du côté où les disques ouvreurs (32) sont rapprochés l'un de l'autre, soit du côté où ils sont écartés l'un de l'autre.

10. Semoir selon l'une des revendications 1 à 9, **caractérisé en ce que** le support transversal (22) du châssis (2), y compris la poutre (24) supportant les socs de semoir (31) et les disques ouvreurs (32), est réglable en hauteur par rapport aux autres parties du châssis (13, 22) à l'aide, par exemple, d'un tendeur (18) ou d'un vérin hydraulique (18a).

11. Semoir selon la revendication 10, **caractérisé en ce que** la poutre transversale (22) est relié aux autres parties du châssis au moyen d'une tringlerie formant parallélogramme (14, 15).

12. Semoir selon l'une des revendications 1 à 11, **caractérisé en ce que** la poutre transversale (22) est segmentée sur toute la largeur de travail du semoir.

13. Semoir selon l'une des revendications 1 à 12, **caractérisé en ce que** le dispositif de réglage vertical (4) est composé d'un rouleau.

14. Semoir selon la revendication 13, **caractérisé en ce que** le rouleau présente la forme d'un rouleau tasseur étoilé à une seule rangée ou à plusieurs rangées.

15. Semoir selon la revendication 13 ou 14, **caractérisé en ce que** le rouleau est associé à une machine de préparation du sol telle qu'une herse centrifuge, une fraiseuse de labour etc.

16. Semoir selon l'une des revendications 13 à 15, **caractérisé en ce que** le rouleau est segmenté sur toute sa largeur de travail.

17. Semoir selon l'une des revendications 1 à 16, **caractérisé en ce que** la trémie à semences (34) du semoir (1) est fixée sur le châssis (2).

18. Semoir selon l'une des revendications 1 à 17, **caractérisé en ce qu'**un élément de rouleau (48) est placé en aval de chaque poutre (24) du châssis (2) du semoir (1).

19. Semoir selon l'une des revendications 1 à 17, **caractérisé en ce qu'**un élément de rouleau commun est placé en aval de plusieurs poutres (24) adjacentes.

20. Semoir selon la revendication 18 ou 19, **caractérisé en ce que** la ou les poutres (24) est (sont) rattachée(s) au support transversal (22) par l'intermédiaire d'une unité à bras oscillants parallèles (45, 46).

21. Semoir selon la revendication 20, **caractérisé en ce qu'**un ressort tendu (53) est intercalé entre le support tyransversal (22) et la ou les poutres (24), lequel maintient la ou les poutres (24) en position de travail tout en chargeant l'élément de rouleau (48).

22. Semoir selon l'une des revendications 1 à 21, **caractérisé en ce que** les disques ouvreurs (32) présentent une circonférence onduleuse ou crénelée.

23. Semoir selon l'une des revendications 1 à 22, **caractérisé en ce que** les disques ouvreurs (32) sont bombés.

24. Semoir selon l'une des revendications 1 à 23, **caractérisé en ce qu'**une machine supplémentaire de travail du sol (55), telle qu'une étrille ou un rouleau de pression, est placée en aval des socs de semoir (31) et des disques ouvreurs (32).

25. Semoir selon la revendication 24, **caractérisé en ce que** la machine supplémentaire de travail du sol (55) est segmentée sur toute sa largeur de travail.

26. Semoir selon l'une des revendications 1 à 25, **caractérisé en ce que** les bras porteurs (26, 27) sont inclinés vers l'arrière selon un angle de 0 à 25° par rapport à la verticale.
